# FASCICULE DE BREVET EUROPEEN

(11) **EP 1 310 159 B1**
(45) Date de publication et mention de la délivrance du brevet: **06.04.2005**
(21) Numéro de dépôt: 02292755.2
(22) Date de dépôt: 05.11.2002
(51) Int. Cl.: A01J 25/12, A01J 25/13

(54) **Procédé de moulage d'un produit fromager**
Formpressverfahren eines Käseprodukts
Moulding method of a cheese product

(30) Priorité: 07.11.2001 FR 0114410
(43) Date de publication de la demande: 14.05.2003
(73) Titulaire: FROMAGERIES BEL, 75008 Paris (FR)
(72) Inventeur: Dal, Sylvain, 41100 Marcilly en Beauce (FR)
(74) Mandataire: Domenego, Bertrand

(56) Documents cités:
- FR-A- 2 532 525
- US-A- 3 421 220
- US-A- 4 112 835
- US-A- 4 738 863
- US-A- 5 948 459

## Description

La présente invention concerne un procédé de moulage d'un produit fromager dans un moule.

On entend par produit fromager un produit résultant de la coagulation du lait et, éventuellement, d'autres étapes d'égouttage, fermentation, affinage, traitement thermique tel que fonte ou cuisson...

En fromagerie traditionnelle, on dose et on moule un mélange caillé/lactosérum dans des systèmes appropriés bien connus de l'homme du métier constitués le plus souvent de répartiteurs sous forme de colonnes placées au-dessus de moules positionnés les uns à côté des autres en une ou plusieurs lignes. Lé mélange caillé/lactosérum descend par gravité dans chaque colonne dont l'extrémité inférieure est fermée par un obturateur qui en position ouverte laisse passer une quantité déterminée de produit qui va se déposer dans le moule correspondant. Le lactosérum est ensuite évacué par gravité ou par pressage au travers de perforations prévues dans le moule.

Un tel procédé de fabrication n'est pas approprié pour produire économiquement des portions de faible masse.

On connaît également de US-4 738 863 et US-3 421 220 des procédés d'extrusion de produits fromagers. L'injection des produits fromagers n'est pas faite dans des moules fermés et ces procédés ne permettent d'obtenir que des formes cylindriques et non des formes tridimensionnelles variées. Le document FR-A-2 532 525 décrit également l'extrusion de produit fromager dans un moule ouvert.

Dans le domaine des fromages fondus, on chauffe éventuellement en présence de sels de fonte une matière première fromagère, obtenue traditionnellement, jusqu'à obtenir un produit fromager sous forme d'un liquide de coefficient de viscosité dynamique compris entre environ 1 et 4 Pa.s (pascal-seconde).

. De façon générale le produit fromager est coulé dans cet état directement dans l'emballage définitif où il subit une étape de refroidissement à l'issue de laquelle il acquiert sa texture et sa forme définitives.

Toutefois ce procédé est limitant quant à la nature de l'emballage définitif qui est traditionnellement à base d'aluminium et de matériaux plastiques souples ou rigides (barquettes par exemple). Or il peut être avantageux d'obtenir des portions nues non emballées et suffisamment fermes pour être manipulables afin de les conditionner dans des matériaux différents, tels que des cires ou d'autres matériaux similaires qui enrobent alors les portions. Ce problème peut être résolu par un procédé qui comprend des étapes de coulage du produit fromager dans un moule intermédiaire, refroidissement dans ce moule, démoulage et conditionnement ultérieur. Ces étapes étant dispendieuses en temps et en équipement ou en main d'oeuvre, ce procédé est réservé à des portions de grandes dimensions et n'est pas approprié pour la production de portions de faible masse.

Un but de l'invention est de résoudre ce problème en permettant de produire directement de manière économique des portions de faible masse d'un produit fromager, ces portions étant à nu et suffisamment fermes à la sortie du moule pour être manipulables.

A cet effet, l'invention a pour objet un procédé de moulage selon la revendication 1.

Les revendications dépendantes précisent des caractéristiques additionnelles facultatives.

L'invention sera mieux comprise à la lecture de la description qui va suivre, donnée uniquement à titre d'exemple, et faite en se référant aux dessins annexés, sur lesquels :
- la figure 1 est une vue schématique avec arrachement partiel d'une installation de production de portions d'un produit fromager selon l'invention,
- la figure 2 est une vue schématique en perspective et agrandie du moule de l'installation de la figure 1, le moule étant en position ouverte,
- la figure 3 est une vue schématique en coupe prise suivant le plan III-III de la figure 2,
- la figure 4 est une vue analogue à la figure 3 illustrant le moulage du produit fromager dans le moule en position fermée,
- la figure 5 est une vue analogue à la figure 2 illustrant le moule en position ouverte après moulage du produit fromager,
- la figure 6 est une vue schématique et en perspective illustrant un autre moule, et
- la figure 7 est une vue schématique d'une portion obtenue à partir du moule de la figure 6.

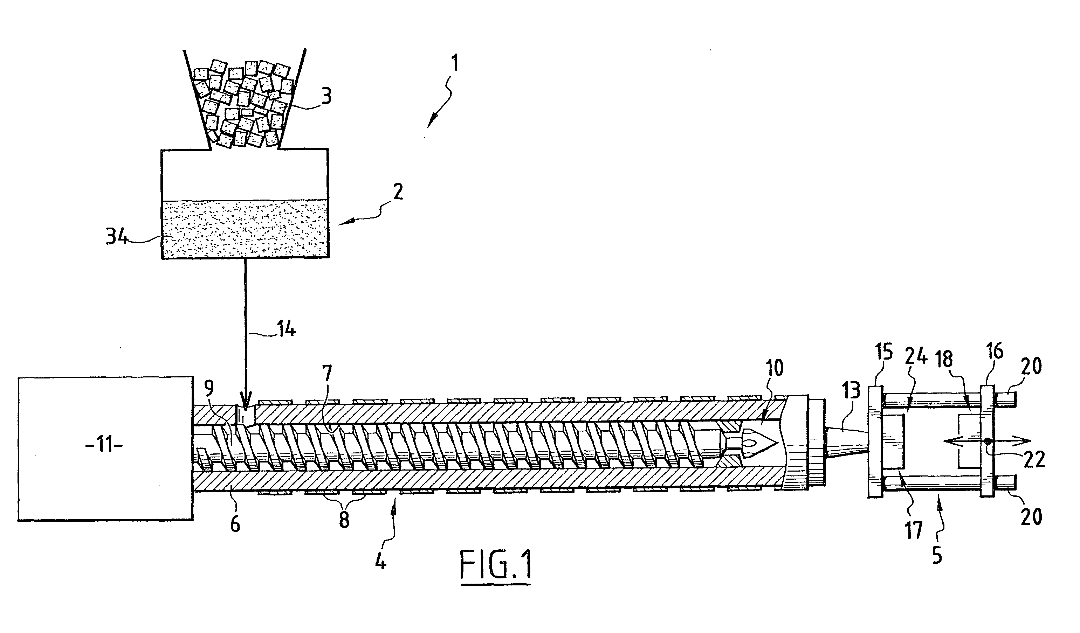

La figure 1 illustre schématiquement une installation 1 de production de portions d'un produit fromager qui comprend essentiellement :
- un cuiseur 2 de fonte et de cuisson d'une matière fromagère de départ, par exemples des morceaux 3 de fromages produits traditionnellement,
- un dispositif 4 de dosage et de mise sous pression du produit fromager issu du cuiseur 2 et,
- un dispositif de moulage 5 raccordé au dispositif 4.

On notera que les dimensions relatives des différents éléments de l'installation 1 n'ont pas été respectées sur la figure 1.

Le cuiseur 2 est un cuiseur classique, notamment muni de moyens d'agitation et de moyens d'addition de sels de fonte à la matière fromagère de départ. Ces différents moyens, classiques en eux-mêmes, n'ont pas été représentés sur les figures.

Le dispositif 4 est un dispositif tel que ceux utilisés pour l'injection sous pression de matière plastique dans des moules.

Le dispositif 4 comprend essentiellement :
- un fourreau fixe 6 traversé par un alésage central 7 et muni de moyens 8 de chauffage tels que des colliers extérieurs,
- une vis piston 9 de dosage et de mise sous pression, montée rotative et coulissante dans l'alésage 7,
- un clapet anti-retour 10 prévu à l'extrémité droite de la vis piston 9,
- un bloc moteur 11 d'entraînement de la vis 9 en rotation autour de l'axe de l'alésage 7 et en translation le long de cet axe, ce bloc moteur 11 étant disposé à l'extrémité gauche de la vis piston 9, et
- une buse d'injection 13 disposée à l'extrémité droite de l'alésage 7.

L'installation 1 comprend des moyens 14 de raccordement du cuiseur 2 à l'extrémité arrière (à gauche sur la figure 1) du fourreau 6 pour alimenter le dispositif 4 en produit fromager.

Comme illustré sur les figures 1 à 5, le dispositif de moulage 5 comprend un bloc fixe 15, un bloc mobile 16, un demi-moule fixe 17 porté par le bloc fixe 15 et un demi-moule mobile 18 porté par le bloc mobile 16. Les deux demi-moules 17 et 18 sont portés par les faces opposées des blocs 15 et 16.

Chaque demi-moule 17, 18 comprend trois demi-cavités ou demi-empreintes 19 disposées en une rangée. Les demi-cavités 19 sont de forme analogue correspondant sensiblement à une moitié de cube. Toutefois, les demi-cavités 19 du demi-moule fixe 17 présentent une dépouille plus faible que celle des demi-cavités 19 du demi-moule mobile 18.

Le bloc mobile 16 est monté coulissant sur quatre tiges 20 prolongeant le bloc fixe 15 vers la droite sur la figure 1.

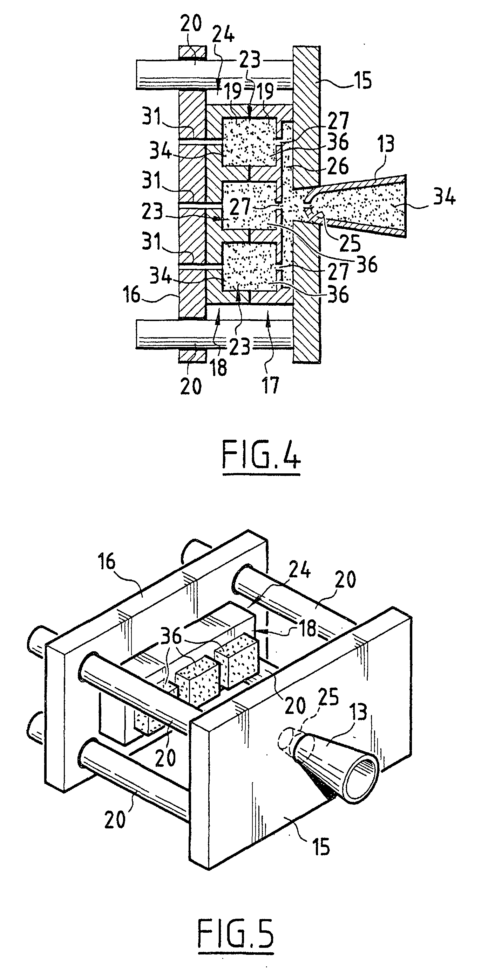

Grâce à des moyens 22 de déplacement (figure 1), il est possible de déplacer le bloc mobile 16 et donc le demi-moule mobile 18 entre deux positions, à savoir une première position éloignée du demi-moule fixe 17 (figures 1 à 3) et une seconde position rapprochée du demi-moule fixe 17 (figure 4).

Lorsque le demi-moule mobile 18 est dans sa seconde position, il est au contact du demi-moule fixe 17. Les demi-cavités 19 communiquent deux à deux pour former trois cavités ou empreintes 23 sensiblement cubiques.

La première position correspond donc à une position ouverte du moule 24 formé par les demi-moules 17 et 18 et la seconde position à une position fermée du moule 24.

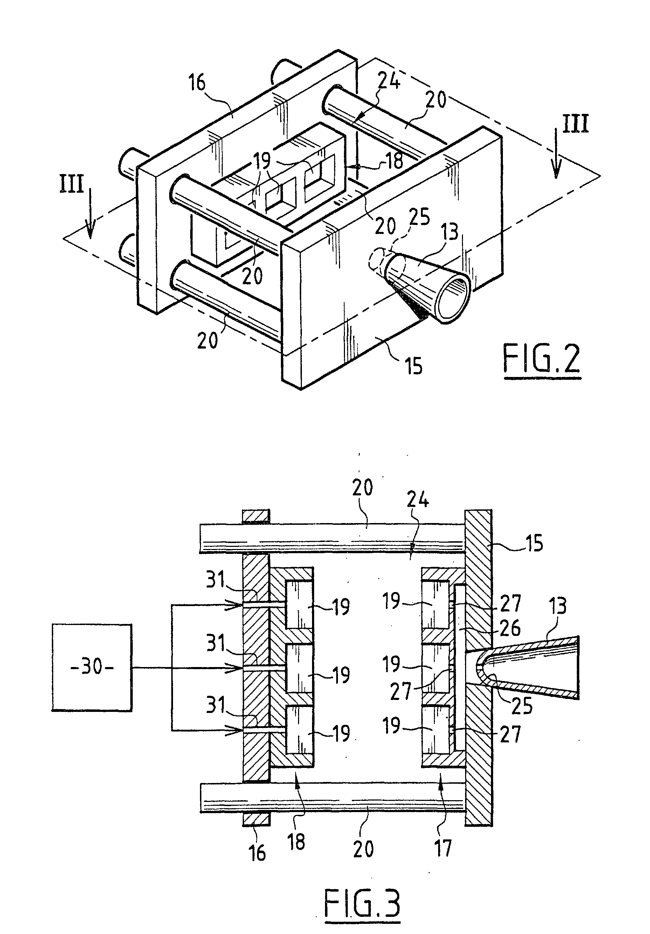

Comme on le voit sur les figures 3 et 4, la buse 13 débouche dans un orifice central 25 ménagé dans le bloc fixe 15 et qui communique, via un canal d'alimentation 26 et trois orifices 27, avec les fonds des demi-cavités 19 du demi-moule fixe 17.

Comme illustré uniquement par la figure 3, une source d'air comprimé 30 est raccordée à trois canaux 31, qui sont ménagés dans le bloc mobile 16 et le demi-moule mobile 18, et qui débouchent chacun dans le fond d'une demi-cavité 19 respective du demi-moule mobile 18.

Le fonctionnement de l'installation 1 est le suivant, le moule 24 étant en position fermée.

Les morceaux 3, par exemple des brins de fromages râpés ou des grains de fromages, sont fondus et cuits dans le cuiseur 2 à une température d'environ 115°C en présence de sels de fonte pour former un produit fromager sous forme d'une pâte 34. De manière générale, la température de cuisson peut être comprise entre 50 et 120°C et de préférence entre 80 et 120°C.

Cette pâte 34 a, par exemple, un extrait sec compris entre 50 et 65% en masse. La teneur en matière grasse de l'extrait sec est, par exemple, comprise entre 20 et 50% en masse. Le coefficient de viscosité dynamique de cette pâte est compris entre 50 Pa.s et 250 Pa.s à une température d'environ 75°C.

La pâte 34 est introduite par les moyens 14 dans le fourreau 6. Une quantité prédéterminée de pâte 34 est accumulée au travers du clapet anti-retour 10 en avant de la vis piston 9, c'est-à-dire à l'extrémité droite de l'alésage 7. Cette étape de dosage est assurée par exemple par rotation et recul simultané de la vis piston 9 c'est-à-dire un mouvement de translation vers la gauche sur la figure 1. La vis piston 9 est ensuite avancée, c'est-à-dire entraînée en translation vers la buse 13, pour mettre sous pression la pâte 34 préalablement dosée.

Cette pâte mise sous pression 34 est ainsi injectée par la buse 13, l'orifice 25, le canal 26 et les orifices 27 dans les cavités 23 du moule 24, comme illustré par la figure 4.

Cette pâte 34 est injectée dans ces cavités 23 sous une pression d'injection comprise entre environ 50 et 200 bars et à une température d'injection d'environ 75°C. On notera que cette température de la pâte a été maintenue grâce aux colliers chauffants 8 du dispositif 4.

La pâte 34 s'écoule alors dans lés cavités 23 en les remplissant complètement et en chassant l'air qui les remplissait vers l'extérieur via les canaux 31.

L'injection de la pâte 34 est ensuite interrompue.

Pendant l'injection, les demi-moules 17 et 18 sont maintenus à une température légèrement inférieure à 35°C, par exemple grâce à un circuit de refroidissement, non-représenté, dont des tronçons traversent les parois des demi-moules 17 et 18 et dans lequel un fluide de refroidissement circule.

Ainsi, la pâte 34 contenue dans les cavités 23 est refroidie très rapidement jusqu'à une température de refroidissement d'environ 35°C pour permettre sa solidification ou « gélification » de sorte qu'elle ne s'écoule sensiblement plus et est suffisamment ferme pour pouvoir être manipulée et permettre son conditionnement ultérieur. Chaque cavité 23 contient alors une portion solide 36 de forme sensiblement cubique.

On provoque alors l'ouverture du moule 24 par déplacement du demi-moule mobile 18 dans sa position éloignée du demi-moule fixe 17 (figure 5).

En raison des différences de dépouilles des demi-cavités 19 des demi-moules 17 et 18, les trois portions ainsi moulées 36 restent prisonnières des demi-cavités 19 du demi-moule mobile 18 et le suivent dans son déplacement.

Ensuite, on éjecte les portions 36 du demi-moule mobile 18 par injection d'air comprimé grâce à la source 30 et aux canaux 31.

Les portions 36 ainsi fabriquées peuvent ensuite être conditionnées automatiquement par un poste de conditionnement non-représenté. Ce conditionnement peut être assuré dans des feuilles de matériaux tels que de l'aluminium ou des matières plastiques ou par enrobage dans de la cire ou des matériaux analogues.

La pâte 34 étant injectée sous pression dans le moule 24, c'est-à-dire à une pression supérieure à celle à l'intérieur des cavités 23 du moule 24 avant injection, la pâte se répartit d'une manière satisfaisante dans les cavités 23 si bien que la seule opération de moulage décrite permet d'atteindre des portions 36 de forme satisfaisante sans qu'il soit nécessaire de prévoir un étage préalable de préformage, ou une étape ultérieure de finition.

Le moulage par injection sous pression permet également d'atteindre une grande cadence de production des portions 36 et s'avère particulièrement approprié pour produire directement et économiquement des portions 36 de dimensions réduites et de faible masse, et notamment de masse inférieure à 50g, ces portions 36 étant nues et suffisamment fermes pour pouvoir être conditionnées ultérieurement.

En outre, le moulage par injection peut être assuré, comme décrit précédemment, en utilisant un produit fromager ayant un extrait sec important, et donc une viscosité importante et une texture proche de celle des fromages traditionnels.

Il peut même s'agir d'un produit de coefficient de viscosité dynamique supérieur à 250 Pa.s, par exemple d'une pâte à la limite de la coulabilité, le produit devant cependant pouvoir s'écouler à la température d'injection.

Ainsi, le produit fromager alimentant le dispositif 4 peut être un produit obtenu par un procédé comprenant les étapes suivantes :
a) traitement thermique et mécanique de type pétrissage d'une matière fromagère de départ, après fractionnement à une température T1 d'au plus 65°C, pour obtenir une déstructuration limitée du réseau protéique de la matière fromagère de départ, puis
b) refroidissement à une température T2 située dans l'intervalle compris entre T1 - 8°C et T1 -20°C, avantageusement T1 - 10°C et T1 - 15°C, les bornes étant incluses,
les étapes a) et b) étant réalisées par addition à la matière fromagère de départ d'une quantité d'au moins 7% en masse et d'au plus 20% en masse d'eau par rapport à la masse de la matière fromagère de départ.

Un tel procédé d'obtention d'un produit fromager est décrit dans le document FR-2 778 821.

Les produits fromagers obtenus par un tel procédé possèdent des textures proches de celles des fromages obtenus traditionnellement et, plus généralement, de bonnes propriétés organoleptiques.

Si on utilise le procédé de moulage décrit précédemment pour mouler un produit fromager ainsi obtenu, les portions 36 peuvent être à la fois de faible masse et avoir une bonne texture. En outre, leur coût de moulage est réduit.

La température d'injection sera quant à elle comprise entre 50 et 120°C et de préférence 70 et 80°C.

Le coefficient de viscosité dynamique du produit fromager sera de préférence compris entre 50 et 250 Pa.s à la température d'injection.

On notera cependant que le procédé de moulage décrit ci-dessus peut également s'appliquer à l'injection de produits fromagers de viscosité plus faible que celle mentionnée ci-dessus, et notamment à coefficient de viscosité dynamique compris entre 1 et 4 Pa.s à la température d'injection.

Il est à noter que le dispositif 4 peut comprendre à la place d'un vis piston 9, une simple vis ou un simple piston.

De manière générale également, l'éjection des portions moulées 36 du moule 24 peut être assurée par gravité, en prévoyant par exemple un revêtement anti-adhérent sur le demi-moule mobile 18, tel qu'un revêtement en TEFLON (marque déposée) ou un revêtement obtenu par vaporisation d'agents anti-adhérents, par exemple des alginates.

Pour assurer que les portions moulées 36 restent sur un demi-moule plutôt que sur l'autre lors de l'ouverture du moule 24, on peut utiliser, plutôt que des dépouilles différentes, des matériaux différents pour réaliser les deux demi-moules 17 et 18, prévoir des rugosités différentes sur les parois des demi-moules 17 et 18 délimitant les demi-cavités 19, maintenir les demi-moules 17 et 18 à des températures différentes...

De manière générale encore, les portions moulées 36 seront refroidies dans le moule 24 jusqu'à une température de refroidissement comprise entre 0 et 45°C et de préférence comprise entre 30 et 35°C, cette température étant telle que le produit fromager ne s'écoule plus.

L'étape de refroidissement dans le moule 24 des portions 36 peut être une étape de refroidissement forcé ou non, et être effectuée non pas simultanément à l'injection mais postérieurement

Par ailleurs, le moulage par injection permet d'atteindre des portions 36 de formes complexes, par exemple des personnages, des animaux, des billes ou d'autres formes tridimensionnelles.

Ainsi, la figure 5 illustre un moule 24 comprenant une première partie fixe 17, une deuxième partie mobile 18, une troisième partie mobile 40. Les parties 17 et 18 comprennent chacune trois demi-cavités 19 qui permettent lorsque les deux parties 17 et 18 sont en contact de délimiter trois cavités sensiblement cubiques.

La troisième partie mobile 40 comprend trois tiges 42 qui font saillie vers le bas et qui peuvent être reçues dans les cavités formées par réunion des demi-cavités 19.

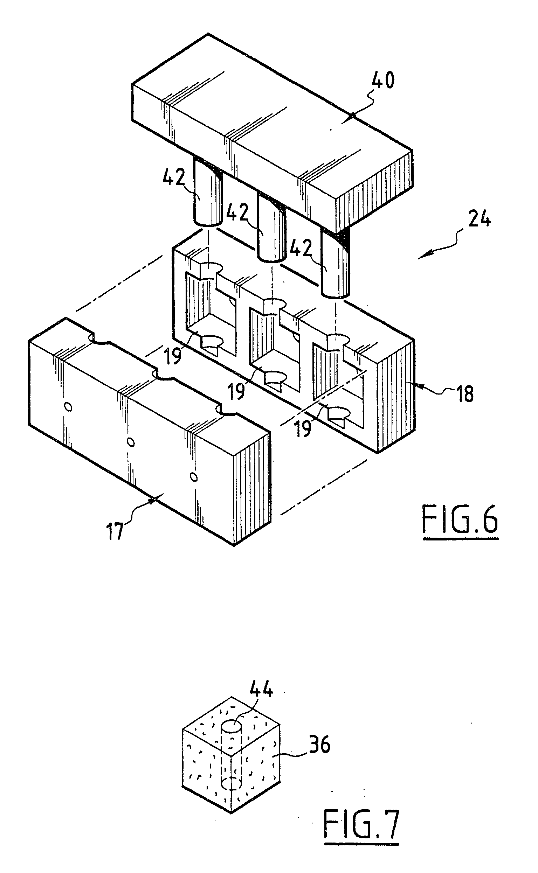

Ainsi, comme illustré par la figure 6 pour une d'entre elles, les trois portions 36 obtenues à partir de ce moule ont des formes cubiques présentant un passage central 44 de forme correspondant à celle des tiges 42.

On notera que ce dernier avantage peut être obtenu indépendamment des caractéristiques du produit fromager moulé, et donc de sa texture.

## Revendications

1. Procédé de moulage tridimensionnel d'un produit fromager (34) dans un moule (24), **caractérisé en ce que** le moule présente une position ouverte et une position fermée, et **en ce que** le procédé comprend des étapes :
- d'injection du produit fromager sous pression dans le moule à une pression d'injection, le produit fromager étant injecté à une température d'injection à laquelle le produit fromager peut s'écouler, le moule étant en position fermée,
- de refroidissement du produit fromager dans le moule (24) jusqu'à une température de refroidissement où le produit fromager ne s'écoule sensiblement pas, puis
- d'ouverture du moule (24).

2. Procédé selon la revendication 1, dans lequel la pression d'injection est comprise entre 50 et 200 bars.

3. Procédé selon la revendication 1 ou 2, dans lequel la température d'injection est comprise entre environ 50 et 120°C.

4. Procédé selon la revendication 3, dans lequel la température d'injection est comprise entre environ 70 et 80°C.

5. Procédé selon la revendication 4, dans lequel la température de refroidissement est comprise entre environ 0°C et environ 40°C.

6. Procédé selon la revendication 5, dans lequel la température de refroidissement est comprise entre environ 30 et 35°C.

7. Procédé selon l'une des revendications précédentes, dans lequel le produit fromager possède à la température d'injection un coefficient de viscosité dynamique supérieur à 50 Pa.s.

8. Procédé selon la revendication 7, dans lequel le produit fromager possède à la température d'injection un coefficient de viscosité dynamique inférieur à 250 Pa.s.

9. Procédé selon l'une des revendications précédentes, comprenant en outre une étape d'obtention du produit fromager par chauffage d'une matière fromagère de départ comprenant des morceaux solides (3).

## Patentansprüche

1. Verfahren zur dreidimensionalen Formgebung eines Käseprodukts (34) in einer Form (24), **dadurch gekennzeichnet, dass** die Form eine offene und eine geschlossene Position besitzt, und dass das Verfahren die Stufen
- Füllen des Käseprodukts unter Druck in die Form mit einem Fülldruck, wobei das Käseprodukt mit einer Fülltemperatur eingefüllt wird, bei welcher es fließen kann und die Form sich in geschlossener Position befindet,
- Abkühlen des Käseprodukts in der Form (24) bis auf eine Kühltemperatur, bei welcher das Käseprodukt im Wesentlichen nicht mehr fließt, und anschließend
- Öffnen der Form (24)
umfasst.

2. Verfahren nach Anspruch 1, in welchem der Fülldruck 50 bis 200 bar beträgt.

3. Verfahren nach Anspruch 1 oder 2, in welchem die Fülltemperatur etwa 50 bis 120 °C beträgt.

4. Verfahren nach Anspruch 3, in welchem die Fülltemperatur etwa 70 bis 80 °C beträgt.

5. Verfahren nach Anspruch 4, in welchem die Kühltemperatur etwa 0 bis etwa 40 °C beträgt.

6. Verfahren nach Anspruch 5, in welchem die Kühltemperatur etwa 30 bis 35 °C beträgt.

7. Verfahren nach einem der vorhergehenden Ansprüche, in welchem die dynamische Viskosität des Käseprodukts bei Fülltemperatur mehr als 50 Pa·s beträgt.

8. Verfahren nach Anspruch 7, in welchem die dynamische Viskosität des Käseprodukts bei Fülltemperatur weniger als 250 Pa·s beträgt.

9. Verfahren nach einem der vorhergehenden Ansprüche, das außerdem eine Stufe zur Herstellung des Käseprodukts durch Erwärmen einer feste Stücke (3) enthaltenden Ausgangskäsemasse umfasst.

## Claims

1. Method for the three-dimensional moulding of a cheese product (34) in a mould (24), **characterized in that** the mould has an open position and a closed position, and **in that** the method comprises steps:
- of injecting the cheese product under pressure into the mould at an injection pressure, the cheese product being injected at an injection temperature at which the cheese product can flow, the mould being in the closed position,
- of cooling the cheese product in the mould (24) at a cooling temperature where the cheese product substantially does not flow, then
- of opening the mould (24).

2. Method according to claim 1, wherein the injection pressure lies between 50 and 200 bar.

3. Method according to claim 1 or 2, wherein the injection temperature lies between approximately 50 and 120°C.

4. Method according to claim 3, wherein the injection temperature lies between approximately 70 and 80°C.

5. Method according to claim 4, wherein the cooling temperature lies between approximately 0°C and approximately 40°C.

6. Method according to claim 5, wherein the cooling temperature lies between approximately 30 and 35°C.

7. Method according to one of the preceding claims, wherein the cheese product possesses, at the injection temperature, a dynamic viscosity coefficient greater than 50 Pa.s.

8. Method according to claim 7, wherein the cheese product possesses, at the injection temperature, a dynamic viscosity coefficient less than 250 Pa.s.

9. Method according to one of the preceding claims additionally including a step for obtaining the cheese product by heating a starting cheese material including solid pieces (3).
